## Europäisches Patentamt
## European Patent Office
## Office européen des brevets

(19)

(11) Veröffentlichungsnummer : **0 070 355**
**B2**

(12) # NEUE EUROPÄISCHE PATENTSCHRIFT

(45) Veröffentlichungstag der neuen Patentschrift :
**14.02.90**

(51) Int. Cl.⁵ : **C 08 F 212/08, C 08 F 2/24**

(21) Anmeldenummer : **82102863.6**

(22) Anmeldetag : **03.04.82**

(54) **Verfahren zur Herstellung von wässrigen Dispersionen von carboxylierten Styrol/Ester-Copolymeren.**

(30) Priorität : **18.07.81 DE 3128448**

(43) Veröffentlichungstag der Anmeldung :
**26.01.83 Patentblatt 83/04**

(45) Bekanntmachung des Hinweises auf die Patenterteilung : **24.07.85 Patentblatt 85/30**

(45) Bekanntmachung des Hinweises auf die Entscheidung über den Einspruch : **14.02.90 Patentblatt 90/07**

(84) Benannte Vertragsstaaten :
**DE FR GB IT NL SE**

(56) Entgegenhaltungen :
**DE—A— 1 570 484**
**DE—A— 1 905 256**
**US—A— 3 062 167**
**US—A— 3 347 700**
**US—A— 3 563 946**
**RESEARCH DISCLOSURE, Nr. 159, Juli 1977, Seite 56, Mitteilung Nr. 15963, Industrial Opportunities Ltd., Homewell, Havant Hampshire, G.B. "Surfactant-free emulsion polymerization process"**
**RESEARCH DISCLOSURE, Nr. 160, August 1977, Seite 8, Mitteilung Nr. 16025, Industrial Opportunities Ltd., Homewell, Havant Hampshire, G.B. "Random copolymers of vinyl acetate"**
**RESEARCH DISCLOSURE; Nr. 162, September 1977, Seite 6, Mitteilung Nr. 16102, Industrial Opprotunities Ltd., Homewell, Havant Hampshire, G.B. "A method for making a latex with a very high proportion of carboxylic acid"**

(73) Patentinhaber : **HÜLS AKTIENGESELLSCHAFT Patentabteilung / PB 15 - Postfach 13 20 D-4370 Marl 1 (DE)**

(72) Erfinder : **Türck, Ulrich, Dr. Gersthofener Strasse 20 D-4370 Marl (DE)**

## Beschreibung

Der Gegenstand der Erfindung betrifft ein Verfahren gemäß dem Oberbegriff des Patentanspruchs.

Ein derartiges Verfahren ist grundsätzlich aus der US-PS 3 563 946 bekannt. Dort wird ein Verfahren zur Herstellung von wäßrigen Kunststoffdispersionen durch Polymerisation eines Monomerengemisches beschrieben, das vorzugsweise aus ≥ 30 Massen-% 1,3-Butadien besteht. Wesentliches Merkmal des Verfahrens ist, daß wenigstens zwei getrennte Stoffströme in die Reaktionszone eingeleitet werden, wobei mit der Dosierung der Stoffströme gleichzeitig begonnen wird. Wenigstens ein Stoffstrom ist nicht wäßrig und enthält im wesentlichen die Monomeren und wenigstens ein weiterer Stoffstrom ist wäßrig und enthält wasserlösliche Polymerisationshilfsmittel.

Von den zahlreichen, denkbaren Verfahrensvarianten wird durch die Beispiele eine solche Variante hervorgehoben, bei welcher zu einer Vorlage, welche aus einem Teil der insgesamt erforderlichen Wassermenge, einem Teil des Emulgators und weiteren üblichen Zusätzen besteht, unter üblichen Reaktionsbedingungen zwei Stoffströme dosiert werden : ein Stoffstrom, bestehend aus einem Monomerengemisch, und ein weiterer Stoffstrom, bestehend aus einer wäßrigen Lösung des Initiators und des restlichen Teils des Emulgators, wobei mit der Dosierung der beiden Stoffströme gleichzeitig begonnen wird.

Wenn man in Analogie zum geschilderten Stand der Technik und gemäß dem Oberbegriff des Patentanspruchs verfährt, macht man zwei überraschende Feststellungen :

1) Bei erkennbar gleichen Bedingungen und aus nicht erkennbaren Gründen wird mal die eine und mal die andere Dispersion mit unterschiedlichen, charakteristischen Eigenschaften erhalten (Dispersion I bzw. II).

2) Die Dispersion I ist charakterisiert durch die niedrigere mittlere Teilchengröße, die niedrigere Viskosität und die geringere pH-Empfindlichkeit der Viskosität im Vergleich zur Dispersion II.

Diese Eigenschaftskombination ist überraschend, da in der Latextechnologie die Regel gilt, daß eine feinteilige Dispersion höher viskos ist und eine höhere pH-Empfindlichkeit der Viskosität aufweist als eine vergleichbare grobteilige Dispersion.

Die Aufgabe der Erfindung ist es, ein Verfahren bereitzustellen, das die zuverlässige Herstellung einer Dispersion des Typs I gestattet.

Die Aufgabe wurde in eleganter und nicht vorhersehbarer Weise wie im Patentanspruch angegeben gelöst.

Die insgesamt erforderliche Wassermenge beträgt im allgemeinen 80 bis 200 Massenteile, bezogen auf 100 Massenteile des gesamten Monomerengemisches.

Die gesamte Emulgatormenge beträgt 0,1 bis 2,0 Massenteile, bezogen auf 100 Massenteile des gesamten Monomerengemisches.

Als Emulgatoren werden anionische Emulgatoren, insbesondere Sulfatgruppen oder Sulfonatgruppen enthaltende Emulgatoren, eingesetzt. Ganz besonders bevorzugte Emulgatoren sind Alkylsulfonate und Alkylarylsulfonate.

Zusätzlich zu den genannten Emulgatoren können nichtionische Emulgatoren eingesetzt werden.

Das Herstellungsverfahren der Erfindung beinhaltet übliche Reaktionsbedingungen, wie übliche Temperaturen und Rührbedingungen und die Gegenwart üblicher Hilfsmittel, wie Puffersalze und Chelatisierungsmittel. Letztere können in der wäßrigen Phase vorgelegt oder zusammen mit der wäßrigen Lösung gemäß Merkmal b.2 zudosiert werden.

Bei der Initiierung mit Redoxsystemen kann die Reduktionskomponente in der wäßrigen Phase vorgelegt werden.

Mit dem Stoffstrom gemäß Merkmal b.1 können auch bis zu 6 Massenteile Hydroxyalkylacrylat oder N-Butoxymethyl-(meth)acrylamid bezogen auf 100 Massenteile des gesamten Monomerengemisches, zudosiert werden.

Beispiele für geeignete Alpha, Beta-olefinisch ungesättigte Carbonsäuren sind (Meth)acryl-, Fumar- und Itaconsäure.

Die Säuren können in teilweise neutralisierter Form eingesetzt werden.

Vorzugsweise werden 1 bis 3 Massenteile (Meth)acrylsäure und 0,5 bis 1,5 Massenteile Acrylamid, bezogen auf 100 Massenteile des gesamten Monomerengemisches, eingesetzt.

Mit dem Stoffstrom gemäß Merkmal b.2 können auch bis zu 5 Massenteile eines weiteren wasserlöslichen, copolymerisierbaren Comonomeren, bezogen auf 100 Massenteile des gesamten Monomerengemisches, zudosiert werden.

Beispiele für geeignete Comonomere sind N-Methylol (meth)acrylamid und N-Methoxymethyl-(meth)acrylamid.

Geeignete, wasserlösliche Initiatoren sind Persulfate, wie Ammonium- und Kaliumperoxodisulfat.

Vorzugsweise werden 0,8 bis 1,5 Massenteile des Initiators, bezogen auf 100 Massenteile des gesamten Monomerengemisches, eingesetzt.

Im allgemeinen geht man so vor, daß man die vorgelegte, wäßrige Phase auf eine Temperatur im Bereich von 50 bis 90 °C aufheizt und dann die Stoffströme gemäß den Merkmalen b.3, b.1 und b.2 unter Beachtung des Merkmals d zudosiert.

Die zulässige, obere Grenze des zeitlichen Abstandes des Beginns der Stoffströme hangt von der Dosierdauer des Stoffstromes gemäß Merkmal b.1 ab. Bei einer Dosierdauer von 7 h beträgt sie beispielsweise ca. 30 min. Bei kürzerer Dosierdauer gilt eine niedrigere zulässige, zeitliche Obergrenze.

Der zeitliche Abstand des Beginns der Stoffströme beträgt vorzugsweise 2 bis 15 min.

Die Variation des zeitlichen Abstandes des Beginns der Stoffströme innerhalb der zulässigen Grenzen bewirkt keine wesentlichen Eigenschaftsänderungen der Dispersion, sondern läßt unter Umständen lediglich ihre charakteristischen Eigenschaften gegenüber der Vergleichsdispersion des Typs II stärker hervortreten.

Die Dosierdauer des Stoffstromes gemäß Merkmal b.1 beträgt im allgemeinen 3 bis 9 h, vorzugsweise 5 bis 7 h, und richtet sich nach der Polymerisationsgeschwindigkeit. Diese hängt u. a. von der Art der eingesetzten Monomeren ab.

Im allgemeinen stellt man die Dosierung der Initiatorlösung gemäß Merkmal b.3 so ein, daß diese das Dosierende der Stoffströme gemäß den Merkmalen b.1 und b.2 zeitlich überschreitet.

Bei der Herstellung der Vergleichsdispersion des Typs II wird wie bei der Herstellung der Dispersion des Typs I der Erfindung verfahren wobei jedoch zuerst mit der Dosierung der Stoffströme gemäß den Merkmalen b.1 und b.2 oder des Stoffstromes, dem die Summe der Zusammensetzungen gemäß den Merkmalen b.1 und b.2 zugrunde liegt, und ⩾ 0,5 min später, vorzugsweise 0,5 bis 10 min später, mit der Dosierung des Stoffstromes gemäß Merkmal b.3 begonnen wird.

Die Dispersionen der Erfindung eignen sich vorzugsweise als Bindemittel in Anstrichfarben und Papierstreichmassen.

Die Erfindung wird durch die folgenden Beispiele erläutert. Das nicht erfindungsgemäße Vergleichsbeispiel und die nicht erfindungsgemäße Vergleichsdisperion werden mit A bezeichnet.

In den Beispielen bedeuten Teile Massenteile.

## Beispiel 1 (Herstellung der Dispersion 1)

In einem 12-l-Polymerisationskessel wurden zu einer Lösung von 0,1 Teilen eines handelsüblichen Natrium-$C_{15}$-Alkylsulfonats, 0,01 Teilen $K_3PO_4$ und 0,01 Teilen des Tetranatriumsalzes der Ethylendiamintetraessigsäure in 90 Teilen Wasser bei 77 °C unter Beachtung der unten angegebenen Startbedingungen drei Stoffströme der folgenden Zusammensetzung dosiert :

1) 48,5 Teile Styrol und
   48 Teile Butylacrylat ;
2) 25 Teile Wasser,
   2,5 Teile Acrylsäure,
   1 Teil Acrylamid,
   0,3 Teile des Natrium-$C_{15}$-Alkylsulfonats,
   0,04 Teile $K_3PO_4$ und
   0,04 Teile des Tetranatriumsalzes der Ethylendiamintetraessigsäure ;
3) 25 Teile Wasser und
   1 Teil Ammoniumperoxodisulfat.

Zuerst wurde mit der Dosierung des Stoffstromes 3 (d. h. des Stoffstromes entsprechend Merkmal b.3) begonnen. Drei Minuten später wurde mit der Dosierung der Stoffströme 1 und 2 (d. h. der Stoffströme entsprechend den Merkmalen b.1 und b.2) begonnen. Die Dosierdauer betrug 7 h bei den Stoffströmen 1 und 2 und 8 h beim Stoffstrom 3.

Die erhaltene Dispersion 1 wurde wie in der Tabelle angegeben charakterisiert.

## Beispiel A (Herstellung der Vergleichsdispersion A)

Es wurde wie im Beispiel 1 angegeben verfahren, wobei jedoch zuerst mit der Dosierung der Stoffströme 1 und 2 und eine Minute später mit der Dosierung des Stoffstromes 3 begonnen wurde.

Die erhaltene Vergleichsdispersion A wurde wie in der Tabelle angegeben charakterisiert.

(Siehe Tabelle Seite 4 f.)

Tabelle

| Dispersion | Trübe *) [%] | Viskosität bei 23 °C [m Pa · s] | |
| --- | --- | --- | --- |
| | | pH 8,5 | pH ≥ 9 |
| 1 | 32 | 346 | 421 |
| A | 55 | 518 | 1 430 |

*) Der Trübewert ist ein Maß für die mittlere Teilchengröße : Je größer der Trübewert, desto höher die mittlere Teilchengröße. Der Trübewert entspricht dem Intensitätsverlust eines Lichtstrahls beim Durchgang durch eine 2 cm dicke Schicht der 0,025 massenprozentigen, wäßrigen Dispersion. Den Trübewerten 32 und 55 % entspricht eine mittlere Teilchengröße von ca. 100 bzw. 160 nm.

## Patentanspruch

Verfahren zur Herstellung von wäßrigen Dispersionen von carboxylierten Styrol/Ester-Copolymerisaten durch halbkontinuierliche Emulsionspolymerisation in Gegenwart eines anionischen Emulgators nach einem Monomerzulaufverfahren mit wenigstens zwei getrennten Stoffströmen ; wobei das Verfahren die folgenden Merkmale aufweist :

a 50 bis 85 Massen-% der insgesamt erforderlichen Wassermenge und 10 bis 50 Massen-% der gesamten Emulgatormenge werden vorgelegt ;

b zur Vorlage werden unter üblichen Reaktionsbedingungen Stoffströme dosiert, welchen die folgenden Zusammensetzungen zugrunde liegen :

b.1 ein Monomerengemisch, bestehend aus :

b.1.1 33,5 bis 65 Massenteilen einer hartmachenden Komponente aus der Gruppe, bestehend aus Styrol und substituiertem Styrol, und

b.1.2 33,5 bis 65 Massenteilen einer weichmachenden Komponente aus der Gruppe der Acrylsäure-($C_2$- bis $C_8$-alkyl)ester ;

b.2 eine wäßrige Lösung von :

b.2.1 1. bis 5 Massenteilen einer copolymerisierbaren, alpha,beta-olefinisch ungesättigten Carbonsäure,

b.2.2 0,5 bis 2 Massenteilen des Amides einer solchen Säure, und

b.2.3 50 bis 90 Massen-% der gesamten Emulgatormenge, wobei der Wasseranteil 7 bis 30 Massen-% der gesamten Wassermenge ist ;

b.3 eine wäßrige Lösung von 0,5 bis 2 Massenteilen eines wasserlöslichen Initiators, wobei der Wasseranteil 8 bis 30 Massen-% der gesamten Wassermenge ist ;

c die gesamte Emulgatormenge beträgt 0,1 bis 2 Massenteile und ist so ausgewählt, daß eine mittlere Teilchengröße von 50 bis 300 nm resultiert ;

d zuerst wird mit der Dosierung des Stoffstromes gemäß Merkmal b.3 und ≥ 0,5 min später mit der Dosierung der Stoffströme gemäß den Merkmalen b.1 und b.2 oder des Stoffstromes, dem die Summe der Zusammensetzungen gemäß den Merkmalen b.1 und b.2 zugrunde liegt, begonnen ; die Massenteile sind jeweils auf 100 Massenteile der gesamten Monomeren bezogen.

## Claim

A process for preparing an aqueous dispersion of a carboxylated styrene/ester copolymer by semicontinuous emulsion polymerisation in the presence of an anionic emulsifier using a monomer feed method involving at least two separate feed flows, the process having the following features :

a 50 to 85 % by weight of the amount of water required in total and 10 to 50 % by weight of the total amount of emulsifier are introduced first ;

b into this mixture flows having the following compositions are fed under conventional reaction conditions, namely :

b. 1 a monomer mixture comprising

b.1.1 33.5 to 65 parts by weight of a hardening component selected from styrene and substituted styrenes, and

b.1.2. 33.5 to 65 parts by weight of a softening component selected from ($C_2$- to $C_8$-alkyl) acrylates ;

b.2 an aqueous solution of

b.2.1 1 to 5 parts by weight of a copolymerisable alpha, beta-olefinically unsaturated carboxylic acid, b.2.2. 0.5 to 2 parts by weight of the amide of such an acid, and

b.2.3 50 to 90 % by weight of the total amount of emulsifier, the water content being 7 to 30 % by weight of the total amount of water ; and

b.3 an aqueous solution of 01.5 to 2 parts by weight of a water-soluble initiator, the water content being 8 to 30 % by weight of the total amount of water ;

c the total amount of emulsifier is 0.1 to 2 parts by weight and is chosen in such a way that a mean particle size of 50 to 300 nm results ; and

d the feed of the flow in accordance with feature b.3 is started first, followed at least 0.5 min. later by the start of the feed of the flows in accordance with features b.1 and b.2 or of the flow which is based on the sum of the compositions in accordance with features b.1 and b.2. ; the parts by weight being based in each case on 100 parts by weight of the total monomers.

## Revendication

Procédé de préparation de dispersions aqueuses de copolymères styrène/ester carboxylés, par polymérisation semi-continue en émulsion, en présence d'un émulsifiant anionique selon un procédé à afflux de monomère avec au moins deux courants distincts de matière, le procédé présentant les caractéristiques suivantes :

a on place initialement de 50 à 85 % en masse de la quantité d'eau nécessaire au total et de 10 à 50 % en masse de la quantité totale d'émulsifiant ;

b à ce mélange mis en place initialement, on ajoute, dans des conditions usuelles de réaction, des courants de matière à la base desquels on trouve les compositions de matière suivantes :

b.1 un mélange de monomères formé de :

b.1.1 33,5 à 65 parties en masse d'un constituant durcisseur pris dans le groupe comprenant le styrène et le styrène substitué, et

b.1.2 33,5 à 65 parties en masse d'un constituant plastifiant pris dans le groupe des acrylates d'alkyle en $C_2$ à $C_8$ ;

b.2 une solution aqueuse de :

b.2.1 1 à 5 parties en masse d'un acide carboxylique copolymérisable à insaturation oléfinique en alpha, bêta,

b.2.2 0,5 à 2 parties en masse de l'amide d'un tel acide, et

b.2.3 50 à 90 % en masse de la quantité totale d'émulsifiant, la proportion d'eau étant de 7 à 30 % en masse de la quantité totale d'eau ;

b.3 une solution aqueuse de 0,5 à 2 parties en masse d'un amorceur hydrosoluble, la proportion d'eau étant de 8 à 30 % en masse de la quantité totale d'eau ;

c la quantité totale d'émulsifiant est de 0,1 à 2 parties en masse et est choisie de telle sorte qu'il en résulte une taille de particules moyenne de 50 à 300 nm ;

d on commence tout d'abord par le dosage des courants de matière selon le point caractérisant b.3 et, au minimum 0,5 mn plus tard, avec le dosage des courants de matière selon les points caractérisants b.1 et b.2 ou du courant de matière à la base duquel se trouve la somme des compositions selon les points caractérisants b.1 et b.2 ; les parties en masse sont chaque fois rapportées à 100 parties en masse du mélange total de monomères.